# EUROPEAN PATENT SPECIFICATION

(11) **EP 4 216 309 B1**
(45) Date of publication and mention of the grant of the patent: **25.03.2026**
(21) Application number: 22868427.0
(22) Date of filing: 30.08.2022
(51) Int. Cl.: C01G 53/00, H01M 4/36, H01M 4/525, H01M 4/505, H01M 4/62, H01M 10/0562, H01M 10/052, H01M 4/02

(54) **POSITIVE ELECTRODE ACTIVE MATERIAL FOR SULFIDE-BASED ALL-SOLID-STATE BATTERY**
POSITIVELEKTRODENAKTIVMATERIAL FÜR SULFIDBASIERTE FESTKÖRPERBATTERIE
MATÉRIAU ACTIF D'ÉLECTRODE POSITIVE POUR BATTERIE ENTIÈREMENT SOLIDE À BASE DE SULFURE

(30) Priority: 07.12.2021 KR 20210173748
(43) Date of publication of application: 26.07.2023
(73) Proprietor: LG Energy Solution, Ltd., Seoul 07335 (KR)
(72) Inventor: LEE, Dae Jin, Daejeon 34122 (KR); KIM, Ji Young, Daejeon 34122 (KR); CHOI, Lak Young, Daejeon 34122 (KR); HAH, Hoe Jin, Daejeon 34122 (KR)
(74) Representative: Goddar, Heinz J.
(86) International application number: PCT/KR2022/012931
(87) International publication number: WO 2023/106562

(56) References cited:
- CN-A- 111 592 052
- CN-A- 113 517 425
- JP-A- 2015 201 388
- JP-A- 2021 174 682
- KR-A- 20160 023 147
- KR-A- 20200 096 738
- KR-A- 20200 141 656
- ZHANG XINGHAN ET AL: "Improvement of electrochemical performance of LiNiCoMnOcathode material via LiWNbOLi-ion conductive coating layer", JOURNAL OF SOLID STATE ELECTROCHEMISTRY, SPRINGER, BERLIN, DE, vol. 24, no. 10, 30 June 2020 (2020-06-30), pages 2301 - 2313, XP037243051, ISSN: 1432-8488, [retrieved on 20200630], DOI: 10.1007/S10008-020-04742-8

## Description

### [Technical Field]

The present invention relates to a positive electrode active material for a sulfide-based all-solid-state battery.

### [Background Art]

All-solid-state lithium batteries are batteries that use sulfide-based or oxide-based solid electrolytes and are capable of directly converting chemical energy into electrical energy by oxidizing or reducing lithium ions with an all-solid-state material as a medium.

Batteries using solid electrolytes exhibit excellent stability compared to an existing liquid electrolyte system, but performance such as capacity, output, and the like still falls short of the existing liquid electrolyte system due to low ion conductivity of the solid electrolyte. The reason why ion conductivity is low in batteries using solid electrolytes is that a contact area between an electrode active material and the solid electrolyte is small compared to the conventional liquid electrolyte system and the inherent ion conductivity of the solid electrolyte is low.

Specifically, all-solid-state batteries have problems such as capacity degradation and the like due to irreversibility caused by an interfacial side reaction between a sulfide-based or oxide-based solid electrolyte and a positive electrode during a charging and discharging reaction and non-uniform distribution of electrode charges caused by interfacial resistance and space-charge layer formation.

In order to solve this problem, a coating technique capable of passivating the surface of a conventional positive electrode active material has been proposed. Passivation is treatment of the surface of any material so that the inherent properties thereof are not changed even by external conditions or stimuli. For example, when a clean iron surface meets oxygen in the air, rust is immediately produced, and a rust prevention treatment for preventing the production of rust is called passivation.

However, despite this effort, the charging/discharging characteristics of a battery fabricated using the passivated positive electrode active material are still poor in many aspects and still need to be improved.

Meanwhile, lithium composite metal oxides (Li(NiCoMn)O₂) as positive electrode active materials of lithium secondary batteries basically exhibit excellent battery characteristics, but have limitations in that safety (especially thermal safety), overcharging characteristics, and the like are insufficient.

Accordingly, attempts have been made to apply lithium composite metal oxides (Li(NiCoMn)O₂) as positive electrode active materials of all-solid-state batteries. However, in the case of batteries using the lithium composite metal oxides, particularly a sulfide-based solid electrolyte, the stability and performance of a positive electrode active material may be degraded due to a reaction between cobalt and sulfur. Also, when the amount of cobalt in the lithium composite metal oxide is reduced to improve the above problem, the discharge capacity of a battery is not sufficiently realized, and thus charge/discharge efficiency is substantially degraded.

### [Related-Art Documents]

Korean Laid-Open Patent Publication No. 10-2021-0117002

ZHANG XINGHAN ET AL, "Improvement of electrochemical performance of LiNiCoMnO cathode material via LiWNbOLi-ion conductive coating layer", JOURNAL OF SOLID STATE ELECTROCHEMISTRY, vol. 24, no. 10, 30 June 2020 (2020-06-30), pages 2301-2313, discloses to coat a cathode material (LiNi_{0.8}Co_{0.1}Mn_{0.1}O₂) with Li_{2.09}W_{0.9}Mn_{0.1}O₄.

### [Disclosure]

### [Technical Problem]

The present invention is directed to providing a positive electrode active material for a sulfide-based all-solid-state battery, which exhibits excellent charging/discharging characteristics, especially excellent discharge capacity, of a battery by using a lithium composite metal oxide having a high nickel content and a low cobalt content, and a sulfide-based all-solid-state battery including the same.

### [Technical Solution]

One aspect of the present invention provides a positive electrode active material for an all-solid-state battery, which includes: a core containing a lithium metal oxide represented by the following Chemical Formula 1; and a shell adsorbed onto the surface of the core and containing niobium (Nb) and tungsten (W):

[Chemical Formula 1] Liₓ[Ni_{y}Co_{z}Mn_{w}M¹ᵥ]Oᵤ

in Chemical Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v, and u satisfy 1.0≤x≤1.30, 0.7≤y<0.95, 0< z≤0.07, 0.01<w≤0.3, 0≤v≤0.1, and 1.5≤u≤4.5. The content ratio of Nb/W of the niobium Nb and the tungsten W is 0.5 to3.0.

In this case, the niobium (Nb) and tungsten (W) may be in a form in which niobium oxide particles and tungsten oxide particles are mixed or in the form of niobium tungsten oxide particles.

In addition, the niobium (Nb) and tungsten (W) may be contained in an amount of 0.01 to 5 wt% with respect to the total weight of the positive electrode active material.

Additionally, the niobium (Nb) may be contained at 2,500 ppm or more with respect to the total positive electrode active material, and the tungsten (W) may be contained at 6,000 ppm or less with respect to the total positive electrode active material.

Additionally, the positive electrode active material may have an average particle size of 0.5 µm to 10 µm.

In addition, the shell may be adsorbed onto 60% or more of the total core area.

Another aspect of the present invention provides a method of preparing a positive electrode active material for an all-solid-state battery, which includes: preparing a mixture including a lithium metal oxide represented by the following Chemical Formula 1 and a niobium (Nb) and tungsten oxide (W)-containing oxide; and thermally treating the mixture:

[Chemical Formula 1] Liₓ[Ni_{y}Co_{z}Mn_{w}M¹_{y}]Oᵤ

in Chemical Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v, and u satisfy 1.0≤x≤1.30, 0.7≤y<0.95, 0< z≤0.07, 0.01<w≤0.3, 0≤v≤0.1, and 1.5≤u≤4.5. The content ratio Nb/W of the niobium (Nb) and tungsten (W) is 0.5-3.0.

In this case, the niobium (Nb) and tungsten (W)-containing oxide oxide may be included in an amount of 0.1 to 10 wt% with respect to the total weight of the mixture.

In addition, the thermal treatment may be performed at 300 °C to 500 °C.

Still another aspect of the present invention provides an all-solid-state lithium secondary battery, which includes: a positive electrode including the above-described positive electrode active material according to the present invention; a negative electrode; and a sulfide-based solid electrolyte disposed between the positive electrode and the negative electrode.

In this case, the sulfide-based solid electrolyte may include one or more selected from the group consisting of Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-L1₂S-P₂O₅, LiI-Li₃PO₄-P₂S₅, and Li₂S-P₂S₅.

### [Advantageous Effects]

A positive electrode active material for an all-solid-state battery according to the present invention is effective for enhancing lithium ion mobility, reducing a side reaction between the positive electrode active material and a solid electrolyte, and thus enhancing the discharge performance of a battery by including a lithium metal oxide of Chemical Formula 1, which has a high nickel content and a low cobalt content, as a core and a shell containing niobium and tungsten on the surface of the core.

### [Detailed Description of the Preferred Embodiments]

As the present invention allows for various changes and a variety of embodiments, particular embodiments will be described in detail in the detailed description.

In the present invention, it should be understood that the term "include(s)" or "have(has)" is merely intended to indicate the presence of features, numbers, steps, operations, components, parts, or combinations thereof, and not intended to preclude the possibility of the presence or addition of one or more other features, numbers, steps, operations, components, parts, or combinations thereof.

In addition, in the present invention, when a portion of a layer, film, region, plate, or the like is referred to as being "on" another portion, this includes not only the case where the portion is "directly on" it but also the case where there is another portion interposed therebetween. Conversely, when a portion of a layer, film, region, plate, or the like is referred to as being "under" another portion, this includes not only the case where the portion is "directly under" it but also the case where there is another portion interposed therebetween. Also, herein, something referred to as being disposed "on" something else may be disposed not only on an upper part of it but also on a lower part of it.

Additionally, in the present invention, "being included as a main component" may mean that a component is included in an amount of 50 wt% or more, 60 wt% or more, 70 wt% or more, 80 wt% or more, 90 wt% or more, 95 wt% or more, or 97.5 wt% or more with respect to the total weight of a composition such as a slurry or a specific component. In some cases, it means that a component is included in an amount of 100 wt% when constituting the entire composition or specific component.

Hereinafter, the present invention will be described in further detail.

### Positive electrode active material for all-solid-state battery

One aspect of the present invention provides a positive electrode active material for an all-solid-state battery, which includes: a core containing a lithium metal oxide; and a shell adsorbed onto the surface of the core and containing niobium (Nb) and tungsten (W).

The positive electrode active material according to the present invention is used in a sulfide-based all-solid-state lithium secondary battery and includes a lithium metal oxide, which exhibits electrical activity during charging and discharging of a battery, as a core and a shell formed by adsorbing particles containing both niobium (Nb) and tungsten (W) onto the surface of the core.

In this case, the lithium metal oxide is not particularly limited as long as it reversibly reacts to provide lithium ions during charging and discharging of a battery, and specifically, a lithium metal oxide represented by the following Chemical Formula 1 may be contained:

[Chemical Formula 1] Liₓ[Ni_{y}Co_{z}Mn_{w}M¹ᵥ]Oᵤ

in Chemical Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v, and u satisfy 1.0≤x≤1.30, 0.7≤y<0.95, 0< z≤0.07, 0.01<w≤0.3, 0≤v≤0.1, and 1.5≤u≤4.5. The content ratio Nb/W of the niobium (Nb) and tungsten (W) is 0.5-3.0.

The lithium metal oxide represented by Chemical Formula 1 is an oxide including transition metals in addition to lithium, particularly, an oxide including, among the transition metals, a large amount of nickel and a certain amount or less of cobalt. Specifically, the lithium metal oxide may include, with respect to 100 molar parts of all of nickel (Ni), cobalt (Co), manganese (Mn), and additional metals (M¹), 70 mol% or more, 75 mol% or more, 80 mol% or more, 85 mol% or more, or 90 mol% or more of nickel and 7 mol% or less, 6 mol% or less, 5 mol% or less, or 3 mol% or less of cobalt (Co).

As an example, the lithium metal oxide may include one or more selected from the group consisting of LiNi_{0.9}Co_{0.05}Mn_{0.05}O₂, LiNi_{0.8}Co_{0.05}Mn_{0.15}O₂, LiNi_{0.7}Co_{0.05}Mn_{0.25}O₂, LiNi_{0.8}CO_{0.05}Mn_{0.01}Al_{0.05}O₂, LiNi_{0.7}Co_{0.05}Mn_{0.15}Al_{0.1}O₂, LiNi_{0.7}Co_{0.05}Mn_{0.2}Al_{0.05}O₂, and LiNi_{0.8}Co_{0.05}Mn_{0.1}Al_{0.05}O₂. The lithium metal oxide is effective for enhancing the charge/discharge capacity of a battery.

In addition, the core has a structure in which a shell containing niobium (Nb) and tungsten (W) is adsorbed onto the surface thereof. Accordingly, an interfacial resistance between the positive electrode active material and a solid electrolyte can be reduced, and resistance to a side reaction between the positive electrode active material and a solid electrolyte can be enhanced to suppress the loss of lithium ions, and thus the electrical performance of a battery can be improved.

Specifically, since the lithium metal oxide represented by Chemical Formula 1 has a layered structure, contraction and expansion according to charging and discharging of a secondary battery greatly occur. Therefore, in the case of a conventional positive electrode active material in which the lithium metal oxide is contained in a core, the contraction and expansion of the core are repeatedly induced according to charging and discharging of a battery, and thus a shell is detached from the surface of the core to increase electrode resistance, and a contact surface cracking phenomenon is induced at the interface between the active material and an electrolyte, which degrades the lifetime of the battery. However, since the shell according to the present invention contains niobium (Nb) and tungsten (W), when the shell is adsorbed onto a core containing the lithium metal oxide represented by Chemical Formula 1, the detachment of the shell, which is caused by contraction and expansion of the core according to charging and discharging of a battery, cannot occur, and a contact surface cracking phenomenon at the interface between an active material and an electrolyte can be substantially improved.

In this case, the shell may contain niobium (Nb) and tungsten (W) in a form in which niobium oxide particles and tungsten oxide particles are mixed or in the form of niobium tungsten oxide particles. Also, the niobium oxide particles may include NbO, NbO₂, Nb₂O₅, Nb₂O₆, and the like, and the tungsten oxide particles may include WO₂, WO₃, W₂O₃, W₂₀O₅₈, W₂₄O₇₀, W₁₈O₄₉, and the like. Also, the niobium tungsten oxide particles may include NbWO₆, Nb₂O₅/WO₃, Nb₈W₉O₄₇, Nb₄W₁₃O₄₇, Nb₇W₁₀O₄₇, Nb₁₄W₃O₄₄, Nb₁₆W₅O₅₅, Nb₁₈W₁₆O₉₃, and the like.

As an example, the shell may have a composition in which Nb₂O₆ particles and WO₃ particles are uniformly mixed. In this case, the niobium oxide and the tungsten oxide have advantages of excellent electrical characteristics and high thermodynamic stability.

As another example, the shell may include NbWO₆ particles. In this case, the positive electrode active material exhibits excellent electrical characteristics and high thermodynamic stability, and thus a side reaction between the positive electrode active material and a sulfide-based solid electrolyte during charging and discharging of a battery can be effectively suppressed, and workability can be good.

In addition, the niobium (Nb) and tungsten (W) contained in the shell may be included in an amount of 0.01 to 5 wt%, specifically 0.01 to 3 wt%, 0.01 to 2 wt%, 1 to 2.5 wt%, 1.5 to 2.3 wt%, 1.8 to 2.4 wt%, 0.05 to 1.9 wt%, 0.1 to 1.5 wt%, 0.1 to 0.9 wt%, or 0.8 to 1.8 wt%, with respect to the total weight of the positive electrode active material.

In the present invention, by controlling the amount of niobium (Nb) and tungsten (W) contained in the shell within the above-described range, excellent electrical conductivity can be imparted to the surface of the positive electrode active material during charging and discharging of a battery, and an insulating property can be imparted to a shell when the electrochemical action of a battery is not performed (e.g., when charging and discharging are not performed), thereby preventing the battery from being self-discharged.

In addition, the shell may contain niobium (Nb) and tungsten (W) at specific concentrations and/or a specific content ratio.

As an example, the niobium (Nb) may be contained at 2,500 ppm or more with respect to the total positive electrode active material, and the tungsten (W) may be contained at 6,000 ppm or less with respect to the total positive electrode active material.

Specifically, the niobium (Nb) may be contained at 2,800 ppm or more, 3,000 ppm or more, 3,200 ppm or more, 3,500 ppm or more, 4,000 ppm or more, 2,500 to 6,000 ppm, 2,500 to 3,500 ppm, or 2,500 to 3,200 ppm with respect to the total positive electrode active material, and the tungsten (W) may be contained at 5,500 ppm or less, 5,000 ppm or less, 4,500 ppm or less, 4,000 ppm or less, 2,000 to 6,000 ppm, 2,000 to 5,500 ppm, 2,000 to 5,000 ppm, 2,000 to 4,500 ppm, or 2,000 to 4,000 ppm with respect to the total positive electrode active material.

The content ratio (Nb/W) of niobium (Nb) and tungsten (W) contained in the shell is 0.5 to 3.0, 0.5 to 2.5, 0.8 to 1.9, 1.1 to 1.8, 1.5 to 2.5, 1.9 to 2.4, or 1.2 to 2.4.

In the present invention, by controlling the concentrations and/or content ratio of niobium (Nb) and tungsten (W) contained in the shell of the positive electrode active material within specific ranges, a reaction between cobalt (Co) contained in the core and sulfur (S) contained in a solid electrolyte can be minimized, and accordingly, the charge/discharge performance, specifically, discharge capacity, of the positive electrode active material can be enhanced.

In addition, the positive electrode active material may have an average particle size of 0.5 µm to 10 µm. In this case, particles constituting the shell (i.e., niobium oxide particles and tungsten oxide particles or niobium tungsten oxide particles) may have an average particle size of 0.1 nm to 40 nm.

More specifically, the positive electrode active material may have an average particle size of 0.5 µm to 8 µm, 0.5 µm to 6 µm, 0.5 µm to 5 µm, 0.5 µm to 4 µm, 5 µm to 9 µm, 1 µm to 4 µm, 2 µm to 4 µm, 4 µm to 7 µm, 0.5 µm to 3 µm, 1 µm to 3 µm, or 3 µm to 8 µm, and particles included in the shell of the positive electrode active material may have an average particle size of 0.1 nm to 30 nm, 0.1 nm to 20 nm, 0.1 nm to 10 nm, 5 nm to 30 nm, 5 nm to 20 nm, 8 nm to 15 nm, or 4 nm to 15 nm.

In the present invention, by controlling the average particle size of the positive electrode active material within the above-described range, the electrode activity of a positive electrode can be improved. Also, by controlling the average particle size of particles constituting the shell within the above-described range, degradation of the electrical activity of the lithium metal oxide of the core can be minimized, a side reaction at the interface with a solid electrolyte can be effectively suppressed, and cracking that may occur in the positive electrode active material surface can be prevented.

Furthermore, the shell containing niobium (Nb) and tungsten (W) may surround 60% or more of the total surface of the core containing the lithium metal oxide. In this case, particles constituting the shell may be uniformly adsorbed onto the surface of the core containing the lithium metal oxide by a physical bond, not a chemical bond. Specifically, the area of particles constituting the shell, which are adsorbed onto the core, may be 60% or more, more specifically, 70% or more, 80% or more, 90% or more, 95% or more, or 98% or more of the core surface area. In the present invention, by controlling the area of the shell adsorbed onto the surface of the core containing the lithium metal oxide within the above-described range, a side reaction between the positive electrode active material and a solid electrolyte can be effectively suppressed without using excessive amounts of niobium (Nb) and tungsten (W).

The positive electrode active material for an all-solid-state battery according to the present invention is effective for enhancing lithium ion mobility, reducing a side reaction between the positive electrode active material and a solid electrolyte, and thus enhancing the discharge performance of a battery by having the above-described configuration.

### Method of preparing positive electrode active material for all-solid-state battery

Another aspect of the present invention provides a method of preparing a positive electrode active material for an all-solid-state battery, which includes: preparing a mixture including a lithium metal oxide represented by the following Chemical Formula 1 and a niobium (Nb) and tungsten (W)-containing oxide oxide; and thermally treating the mixture:

[Chemical Formula 1] Lix[Ni_{y}Co_{z}Mn_{w}M¹ᵥ]Oᵤ

in Chemical Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v, and u satisfy 1.0≤x≤1.30, 0.7≤y<0.95, 0< z≤0.07, 0.01<w≤0.3, 0≤v≤0.1, and 1.5≤u≤4.5. The content ratio Nb/W of the niobium (Nb) and tungsten (W) is 0.5-3.0.

The method of preparing a positive electrode active material for an all-solid-state battery according to the present invention relates to a method of preparing the above-described positive electrode active material for an all-solid-state battery according to the present invention and is performed by preparing a mixture including a lithium metal oxide represented by Chemical Formula 1, which constitutes a core, and a niobium (Nb) and tungsten (W)-containing oxide constituting a shell and thermally treating the mixture.

In this case, the preparation of a mixture including a lithium metal oxide and a niobium (Nb) and tungsten (W)-containing oxide may be performed using a dry mixer, a stirrer, a shaker such as an orbital shaker or the like, a mortar mixer, or a milling machine such as a planetary ball mill or the like, which is used to mix powders such as metal compounds and the like in the art, but the present invention is not limited thereto.

As an example, the preparation of a mixture may be performed with an energy of 1 to 100 kWh/1 kg at 50 to 500 rpm for 0.1 to 10 hours using a planetary ball mill based on 1 kg of the mixture.

As another example, the preparation of a mixture may be performed by mixing for 1 to 10 hours, specifically, 2 to 8 hours using a shaker.

In addition, in the mixture, the lithium metal oxide represented by Chemical Formula 1 may be an oxide including transition metals in addition to lithium, particularly, an oxide having a high nickel content among the transition metals. As an example, the lithium metal oxide may include one or more selected from the group consisting of LiNi_{0.9}Co_{0.05}Mn_{0.05}O₂, LiNi_{0.8}Co_{0.05}Mn_{0.15}PO₂, LiNi_{0.7}Co_{0.05}Mn_{0.25}O₂, LiNi_{0.8}Co_{0.05}Mn_{0.1}Al_{0.05}O₂, LiNi_{0.7}Co_{0.05}Mn_{0.15}Al_{0.1}O₂, LiNi_{0.7}Co_{0.05}Mn_{0.2}Al_{0.05}O₂, and LiNi_{0.8}Co_{0.05}Mn_{0.1}Al_{0.05}O₂.

Additionally, the niobium (Nb) and tungsten (W)-containing oxide may include niobium (Nb) and tungsten (W) in a form in which niobium oxide particles and tungsten oxide particles are mixed or in the form of niobium tungsten oxide particles.

In addition, the niobium oxide particles may include NbO, NbO₂, Nb₂O₅, Nb₂O₆, and the like, and the tungsten oxide particles may include WO₂, WO₃, W₂O₃, W₂₀O₅₈, W₂₄O₇₀, W₁₈O₄₉, and the like. Also, the niobium tungsten oxide particles may include NbWO₆, Nb₂O₅/WO₃, Nb₈W₉O₄₇, Nb₄W₁₃O₄₇, Nb₇W₁₀O₄₇, Nb₁₄W₃O₄₄, Nb₁₆W₅O₅₅, Nb₁₈W₁₆O₉₃, and the like.

As an example, the shell may have a composition in which Nb₂O₆ particles and WO₃ particles are uniformly mixed. In this case, the niobium oxide and the tungsten oxide have advantages of excellent electrical characteristics and high thermodynamic stability.

As another example, the shell may include NbWO₆ particles. In this case, the positive electrode active material exhibits excellent electrical characteristics and high thermodynamic stability, and thus a side reaction between a positive electrode active material and a sulfide-based solid electrolyte during charging and discharging of a battery can be effectively suppressed, and workability can be good.

In addition, the mixture may include the niobium (Nb) and tungsten (W)-containing oxide in an amount of 0.01 to 5 wt%, specifically, 0.01 to 3 wt%, 0.01 to 2 wt%, 1 to 2.5 wt%, 1.5 to 2.3 wt%, 1.8 to 2.4 wt%, 0.05 to 1.9 wt%, 0.1 to 1.5 wt%, 0.1 to 0.9 wt%, or 0.8 to 1.8 wt% with respect to the total weight of the mixture.

Additionally, the niobium (Nb) and tungsten (W)-containing oxide may contain niobium (Nb) and tungsten (W) at specific concentrations and/or a specific content ratio.

As an example, the niobium (Nb) may be contained at 2,500 ppm or more with respect to the total mixture, and the tungsten (W) may be contained at 6,000 ppm or less with respect to the total mixture.

Specifically, the niobium (Nb) may be contained at 2,800 ppm or more, 3,000 ppm or more, 3,200 ppm or more, 3,500 ppm or more, 4,000 ppm or more, 2,500 to 6,000 ppm, 2,500 to 3,500 ppm, or 2,500 to 3,200 ppm with respect to the total mixture, and the tungsten (W) may be contained at 5,500 ppm or less, 5,000 ppm or less, 4,500 ppm or less, 4,000 ppm or less, 2,000 to 6,000 ppm, 2,000 to 5,500 ppm, 2,000 to 5,000 ppm, 2,000 to 4,500 ppm, or 2,000 to 4,000 ppm with respect to the total mixture.

The content ratio (Nb/W) of niobium (Nb) and tungsten (W) contained in the mixture is 0.5 to 3.0, 0.5 to 2.5, 0.8 to 1.9, 1.1 to 1.8, 1.5 to 2.5, 1.9 to 2.4, or 1.2 to 2.4.

In the present invention, by controlling the content ratio and/or concentrations of niobium (Nb) and tungsten (W) contained in the niobium (Nb) and tungsten (W)-containing oxide mixed with the lithium metal oxide, which is the core, within specific ranges, a reaction between cobalt (Co) contained in the core and sulfur (S) contained in a solid electrolyte can be minimized, and accordingly, the charge/discharge performance, specifically, discharge capacity, of a positive electrode active material can be enhanced.

In addition, the thermal treatment of the mixture including the lithium metal oxide and the niobium (Nb) and tungsten (W)-containing oxide is a step for fixing the niobium (Nb) and tungsten (W)-containing oxide physically adsorbed onto the surface of the lithium metal oxide which is the core.

In this case, a thermal treatment temperature may be 300 °C or more, preferably, 300 °C to 480 °C, 350 °C to 500 °C, 400 °C to 500 °C, or 420 °C to 480 °C.

In the present invention, by controlling the thermal treatment temperature of the mixture including the lithium metal oxide and the niobium (Nb) and tungsten (W)-containing oxide within the above-described range, the niobium (Nb) and tungsten (W)-containing oxide can be easily fixed onto the surface of the lithium metal oxide, which is the core, without any side reaction.

According to the method of preparing a positive electrode active material for an all-solid-state battery of the present invention, a shell in which the niobium (Nb) and tungsten (W)-containing oxide is uniformly applied without being aggregated on the surface of the core containing the lithium metal oxide can be formed, and thus preparation efficiency of a positive electrode active material with a core-shell structure can be excellent.

### All-solid-state lithium secondary battery

Still another aspect of the present invention provides an all-solid-state lithium secondary battery, which includes: a positive electrode including the above-described positive electrode active material according to the present invention; a negative electrode; and a sulfide-based solid electrolyte disposed between the positive electrode and the negative electrode.

Since the all-solid-state lithium secondary battery according to the present invention includes a positive electrode including the above-described positive electrode active material of the present invention, a contact surface cracking (void generation) phenomenon that occurs at the interface between the positive electrode active material and the solid electrolyte is substantially minimized, a side reaction is suppressed, and thus lithium ion mobility of an electrode can be excellent, and particularly, the discharge performance of the battery can be enhanced.

In this case, the positive electrode may have a structure in which a positive electrode mixture layer including the above-described positive electrode active material of the present invention is formed on a positive electrode current collector.

The positive electrode current collector is not particularly limited as long as it does not cause a chemical change in the battery and has high conductivity, and for example, stainless steel, aluminum, nickel, titanium, calcined carbon, or aluminum or stainless steel whose surface has been treated with carbon, nickel, titanium, silver, or the like may be used.

In addition, the positive electrode mixture layer may include the positive electrode active material, a conductive material, a binder, and a solid electrolyte, and in some cases, may further include an additive.

In this case, the positive electrode active material may include: a core containing a lithium metal oxide represented by the following Chemical Formula 1; and a shell adsorbed onto the surface of the core and containing niobium (Nb) and tungsten (W).

[Chemical Formula 1] Liₓ[Ni_{y}Co_{z}Mn_{w}M¹_{y}]Oᵤ

In Chemical Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v, and u satisfy 1.0≤x≤1.30, 0.7≤y<0.95, 0< z≤0.07, 0.01<w≤0.3, 0≤v≤0.1, and 1.5≤u≤4.5. The content ratio Nb/W of the niobium (Nb) and tungsten (W) is 0.5-3.0.

The lithium metal oxide is not particularly limited as long as it is represented by Chemical Formula 1, and specifically, one or more selected from the group consisting of LiNi_{0.9}Co_{0.05}Mn_{0.05}O₂, LiNi_{0.8}Co_{0.05}Nb_{0.15}O₂, LiNi_{0.7}Co_{0.05}Mn_{0.25}O₂, LiNi_{0.8}Co_{0.05}Mn_{0.1}Al_{0.05}O₂, LiNi_{0.7}Co_{0.05}Mn_{0.15}Al_{0.1}O₂, LiNi_{0.7}Co_{0.05}Mn_{0.2}Al_{0.05}O₂, and LiNi_{0.8}Co_{0.05}Mn_{0.1}Al_{0.05}O₂ may be contained.

In this case, the shell may contain niobium (Nb) and tungsten (W) in a form in which niobium oxide particles and tungsten oxide particles are mixed or in the form of niobium tungsten oxide particles. Also, the niobium oxide particles may include NbO, NbO₂, Nb₂O₅, Nb₂O₆, and the like, and the tungsten oxide particles may include WO₂, WO₃, W₂O₃, W₂₀O₅₈, W₂₄O₇₀, W₁₈O₄₉, and the like. Also, the niobium tungsten oxide particles may include NbWO₆, Nb₂O₅/WO₃, Nb₈W₉O₄₇, Nb₄W₁₃O₄₇, Nb₇W₁₀O₄₇, Nb₁₄W₃O₄₄, Nb₁₆W₅O₅₅, Nb₁₈W₁₆O₉₃, and the like.

As an example, the shell may have a composition in which Nb₂O₆ particles and WO₃ particles are uniformly mixed. In this case, the niobium oxide and the tungsten oxide have advantages of excellent electrical characteristics and high thermodynamic stability.

As another example, the shell may include NbWO₆ particles. In this case, the positive electrode active material exhibits excellent electrical characteristics and high thermodynamic stability, and thus a side reaction between the positive electrode active material and the sulfide-based solid electrolyte during charging and discharging of the battery can be effectively suppressed, and workability can be good.

In addition, the niobium (Nb) and tungsten (W) contained in the shell may be included in an amount of 0.01 to 5 wt% specifically, 0.01 to 3 wt%, 0.01 to 2 wt%, 1 to 2.5 wt%, 1.5 to 2.3 wt%, 1.8 to 2.4 wt%, 0.05 to 1.9 wt%, 0.1 to 1.5 wt%, 0.1 to 0.9 wt%, or 0.8 to 1.8 wt% with respect to the total weight of the positive electrode active material.

In the present invention, by controlling the amount of niobium (Nb) and tungsten (W) contained in the shell within the above-described range, excellent electrical conductivity can be imparted to the positive electrode active material surface during charging and discharging of the battery, and an insulating property can be imparted to a shell when the electrochemical action of the battery is not performed (e.g., when charging and discharging are not performed), thereby preventing the battery from being self-discharged.

In addition, the shell may contain niobium (Nb) and tungsten (W) at specific concentrations and/or a specific content ratio.

As an example, the niobium (Nb) may be contained at 2,500 ppm or more with respect to the total positive electrode active material, and the tungsten (W) may be contained at 6,000 ppm or less with respect to the total positive electrode active material.

Specifically, the niobium (Nb) may be contained at 2,800 ppm or more, 3,000 ppm or more, 3,200 ppm or more, 3,500 ppm or more, 4,000 ppm or more, 2,500 to 6,000 ppm, 2,500 to 3,500 ppm, or 2,500 to 3,200 ppm with respect to the total positive electrode active material, and the tungsten (W) may be contained at 5,500 ppm or less, 5,000 ppm or less, 4,500 ppm or less, 4,000 ppm or less, 2,000 to 6,000 ppm, 2,000 to 5,500 ppm, 2,000 to 5,000 ppm, 2,000 to 4,500 ppm, or 2,000 to 4,000 ppm with respect to the total positive electrode active material.

The content ratio (Nb/W) of niobium (Nb) and tungsten (W) contained in the shell is 0.5 to 3.0, 0.5 to 2.5, 0.8 to 1.9, 1.1 to 1.8, 1.5 to 2.5, 1.9 to 2.4, or 1.2 to 2.4.

In the present invention, by controlling the content ratio and/or concentrations of niobium (Nb) and tungsten (W) contained in the shell of the positive electrode active material within specific ranges, a reaction between cobalt (Co) contained in the core and sulfur (S) contained in the solid electrolyte can be minimized, and accordingly, the charge/discharge performance, specifically, discharge capacity, of the positive electrode active material can be enhanced.

In addition, the conductive material is not particularly limited as long as it does not cause a chemical change in the battery and has conductivity. Specifically, any one or a mixture of graphite, a carbon-based material, a metal powder or metal fiber, an acicular or branched conductive whisker, a conductive metal oxide, and a conductive polymer, may be used. More specifically, any one or a mixture of graphite such as natural graphite, artificial graphite, or the like; a carbon-based material such as carbon black, acetylene black, Ketjen black, channel black, furnace black, lamp black, thermal black, carbon fiber, or the like; a metal powder or metal fiber containing copper, nickel, aluminum, silver, or the like; an acicular or branched conductive whisker such as a zinc oxide whisker, a calcium carbonate whisker, a titanium dioxide whisker, a silicon oxide whisker, a silicon carbide whisker, an aluminum borate whisker, a magnesium borate whisker, a potassium titanate whisker, a silicon nitride whisker, a silicon carbide whisker, an alumina whisker, or the like; a conductive metal oxide such as titanium oxide or the like; and a conductive polymer such as a polyphenylene derivative or the like may be used.

Additionally, the binder for the positive electrode may be any one or a mixture of two or more selected from the group consisting of N,N-bis[3-(triethoxysilyl)propyl]urea, polyethylene oxide (PEO), poly(vinylidene fluoride) (PVDF), and poly(vinylidene fluoride-co-hexafluoropropylene) (PVDF-co-HFP) or any one or a mixture of two or more selected from the group consisting of N,N-bis[3-(triethoxysilyl)propyl]urea, PEO, PVDF, PVDF-co-HFP, conjugated diene-based rubber latex such as acrylonitrile-based styrene butadiene rubber (SBR), acrylonitrile butadiene rubber (NBR), methyl methacrylate-butadiene rubber (MBR), butadiene rubber (BR), and the like, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, styrene-butadiene rubber, fluoro-rubber, and various copolymers thereof.

In addition, the negative electrode may have a structure in which a negative electrode mixture layer including a negative electrode active material is formed on a negative electrode current collector.

The negative electrode current collector is not particularly limited as long as it does not cause a chemical change in the battery and has high conductivity, and for example, stainless steel, copper, nickel, titanium, calcined carbon, or stainless steel whose surface has been treated with carbon, nickel, titanium, silver, or the like may be used.

In addition, the negative electrode mixture layer may include the negative electrode active material, a conductive material, a binder, and a solid electrolyte, and in some cases, may further include an additive.

In this case, the negative electrode active material may be one selected from the group consisting of a lithium metal, a lithium alloy, a lithium metal composite oxide, a lithium-containing titanium composite oxide (LTO), and a combination thereof. Here, the lithium alloy may be an alloy composed of lithium and at least one metal selected from Na, K, Rb, Cs, Fr, Be, Mg, Ca, Sr, Ba, Ra, Al, and Sn. Also, the lithium metal composite oxide may be an oxide composed of lithium and any one metal (Me) selected from the group consisting of Si, Sn, Zn, Mg, Cd, Ce, Ni, and Fe and may be, for example, LiₓFe₂O₃ (0<x≤1) or LiₓWO₂ (0<x≤1).

In addition, the negative electrode active material may be a metal composite oxide such as SnₓMe₁₋ₓMe'_{y}O_{z} (Me: Mn, Fe, Pb, Ge; Me': Al, B, P, Si, Group 1, Group 2, and Group 3 elements of the periodic table, halogens; 0<x≤1; 1≤y≤3; 1≤z≤8) or the like; an oxide such as SnO, SnO₂, PbO, PbO₂, Pb₂O₃, Pb₃O₄, Sb₂O₃, Sb₂O₄, Sb₂O₅, GeO, GeO₂, Bi₂O₃, Bi₂O₄, Bi₂O₅, or the like; or the like, and a carbon-based negative electrode active material such as crystalline carbon, amorphous carbon, or a carbon composite may be used alone or in a combination of two or more.

Additionally, the conductive material may be nickel powder, cobalt oxide, titanium oxide, carbon, or the like. As carbon, any one or more selected from the group consisting of Ketjen black, acetylene black, furnace black, graphite, carbon fiber, and fullerene may be used.

In addition, the binder for the negative electrode may be any one or a mixture of two or more selected from the group consisting of N,N-bis[3-(triethoxysilyl)propyl]urea, polyethylene oxide (PEO), poly(vinylidene fluoride) (PVDF), and poly(vinylidene fluoride-co-hexafluoropropylene) (PVDF-co-HFP) or any one or a mixture of two or more selected from the group consisting of N,N-bis[3-(triethoxysilyl)propyl]urea, PEO, PVDF, PVDF-co-HFP, conjugated diene-based rubber latex such as styrene butadiene rubber (SBR), acrylonitrile butadiene rubber (NBR), methyl methacrylate-butadiene rubber (MBR), butadiene rubber (BR), and the like, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, styrene-butadiene rubber, fluoro-rubber, and various copolymers thereof.

Furthermore, the solid electrolyte includes sulfide-based particles, and as the sulfide-based particles, any sulfide-based particles that are typically used as an electrolyte of a sulfide-based all-solid-state battery in the art may be used. Specifically, one or more amorphous solid electrolytes selected from the group consisting of Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-Li₂S-P₂O₅, LiI-Li₃PO₄-P₂S₅, and Li₂S-P₂S₅ may be used.

The sulfide-based particles may have an average particle diameter of 0.1 µm to 50 µm, specifically, 0.1 µm to 10 µm. In the present invention, by controlling the average particle diameter of sulfide-based particles constituting the solid electrolyte within the above-described range, the porosity of the solid electrolyte is increased, and thus degradation of battery capacity can be improved.

Hereinafter, the present invention will be described in further detail with reference to examples and experimental examples.

However, it should be understood that the following examples and experimental examples are given for the purpose of illustration only and are not intended to limit the scope of the present invention.

### Examples 1 to 3. Preparation of positive electrode active material for sulfide-based all-solid-state battery

LiNi_{0.81}Co_{0.05}Mn_{0.12}Al_{0.02}O₂ having an average particle size of 5±0.1 µm and a niobium tungsten oxide (NbWO₆) having an average particle size of 20±5 nm were input into a ball mill jar and subjected to ball milling with an energy of 10 kWh/1 kg at 200±50 rpm for an hour to obtain a mixture in which LiNi_{0.81}Co_{0.05}Mn_{0.12}Al_{0.02}O₂ and the niobium tungsten oxide (NbWO₆) were uniformly mixed. In this case, the total amount and content ratio of niobium (Nb) and tungsten (W) contained in the mixture are shown in Table 1 below.

The mixture was transferred to an oven and then thermally treated at 450±10 °C for 2 hours to obtain a positive electrode active material (average particle size: 5±0.2 µm) in which the niobium tungsten oxide (NbWO₆) was uniformly applied onto the surface of the core LiNi_{0.81}Co_{0.05}Mn_{0.12}Al_{0.02}O₂.

**[Table 1]**

| | Total amount of Nb and W | Content ratio (Nb/W) of Nb and W | Proportion of adsorbed shell area relative to core area |
|---|---|---|---|
| Example 1 | 0.5 wt% | 2.0~2.3 | about 92% |
| Example 2 | 1.0 wt% | 1.3~1.5 | about 95% |
| Example 3 | 1.5 wt% | 0.4~0.6 | about 99% |

### Comparative Examples 1 to 3. Preparation of positive electrode active material for sulfide-based all-solid-state battery

A positive electrode active material (average particle size: 5±0.2 µm) in which a shell was formed on the surface of a core LiNi_{0.81}Co_{0.05}Mn_{0.12}Al_{0.02}O₂ was obtained in the same manner as in Example 1, except that shell components shown in the following Table 2 were used instead of a niobium tungsten oxide (NbWO₆).

**[Table 2]**

| | Shell component | Total amount of shell component contained in mixture | Proportion of adsorbed shell area relative to core area |
|---|---|---|---|
| Comparative Example 1 | - | - | - |
| Comparative Example 2 | Boron (B) | 1.0 wt% | about 91% |
| Comparative Example 3 | Niobium (Nb) | 1.0 wt% | about 92% |

### Examples 4 to 6 and Comparative Examples 4 to 6. Fabrication of sulfide-based all-solid-state battery

Each positive electrode active material prepared in Examples 1 to 3 and Comparative Examples 1 to 3 was used to fabricate a sulfide-based all-solid-state battery.

Specifically, each positive electrode active material prepared in Examples 1 to 3 and Comparative Examples 1 to 3, a sulfide-based solid electrolyte (Li₂S-P₂S₅), a conductive material (carbon black), and a binder (PVDF) were mixed in a weight ratio of 80:15:3:2, and the resulting mixture was applied onto an aluminum thin plate (thickness: 40 µm) and roll-pressed at room temperature to manufacture a positive electrode.

Separately, a lithium metal (Li) thin plate (thickness: 40 µm) was prepared as a negative electrode. A solid electrolyte membrane (70 µm, 2.8×10⁻³ S/cm, Li₁₀SnP₂S₁₂) was interposed between the manufactured positive electrode and the prepared negative electrode to fabricate a sulfide-based all-solid-state battery.

**[Table 3]**

| | Positive electrode active material used |
|---|---|
| Example 4 | Positive electrode active material of Example 1 |
| Example 5 | Positive electrode active material of Example 2 |
| Example 6 | Positive electrode active material of Example 3 |
| Comparative Example 4 | Positive electrode active material of Comparative Example 1 |
| Comparative Example 5 | Positive electrode active material of Comparative Example 2 |
| Comparative Example 6 | Positive electrode active material of Comparative Example 3 |

### Experimental Examples.

In order to evaluate the characteristics of the positive electrode active material for the sulfide-based all-solid-state battery according to the present invention, experiments were performed as follows.

### A) Analysis of cross-sectional structure of positive electrode mixture layer

Each sulfide-based all-solid-state battery fabricated in Examples 4 to 6 and Comparative Examples 4 to 6 was prepared in a non-standby state, the lifetime of the battery was advanced under the condition of 3.0 to 4.25 V and 0.1C at room temperature (25±1 °C), each battery was disassembled, and a positive electrode mixture layer was analyzed by scanning electron microscopy (SEM).

As a result, in the case of the batteries of the examples according to the present invention, it was confirmed that the niobium (Nb) and tungsten (W)-containing shell was uniformly adsorbed onto the surface of the lithium metal oxide (LiNi_{0.8}Co_{0.1}Mn_{0.1}O₂) which was the core. This means that a contact surface cracking (void generation) phenomenon that occurs at the interface between the lithium metal oxide contained in the core and the sulfide-based solid electrolyte was prevented, and a side reaction and the like were suppressed.

On the other hand, in the case of the batteries of the comparative examples, it was confirmed that cracking occurred between the lithium metal oxide (LiNi_{0.8}Co_{0.1}Mn_{0.1}O₂) which was the core and the sulfide-based solid electrolyte.

From these results, it can be seen that, since the positive electrode active material for the sulfide-based all-solid-state battery according to the present invention includes the niobium and tungsten-containing shell uniformly adsorbed onto the surface of the core containing the lithium metal oxide, a contact surface cracking (void generation) phenomenon between the lithium metal oxide of the core and the solid electrolyte and side reactions according thereto are prevented from occurring.

### B) Evaluation of battery performance

Each sulfide-based all-solid-state battery fabricated in Examples 4 to 6 and Comparative Examples 4 to 6 was fixed to a jig in a 25 °C chamber and subjected to initial charging and discharging under the condition of 0.1C, then initial charge capacity and initial discharge capacity were measured, and charge/discharge efficiency was calculated therefrom. In this case, the charging was performed by constant current charging (CCC), and c/o was controlled to 0.05C.

Afterward, the secondary battery was subjected to two cycles of charging and discharging at 25 °C, and then discharge capacity was measured. In this case, the charging was performed at a current density of 0.1C, and the discharging was performed at current densities of 0.1C and 1C respectively. From the measurement result, a ratio (1C/0.1C) of discharge capacity at 1C and discharge capacity at 0.1C was obtained, and results thereof are shown in the following Table 4.

**[Table 4]**

| | Initial charging and discharging | | | 1C/0.1C [%] |
|---|---|---|---|---|
| | Charge capacity [mAh/g] | Discharge capacity [mAh/g] | Charge/discharge efficiency [%] | |
| Example 4 | 229 | 192 | 84 | 78 |
| Example 5 | 234 | 196 | 84 | 81 |
| Example 6 | 228 | 170 | 74 | 71 |
| Comparative Example 4 | 204 | 145 | 71 | 23 |
| Comparative Example 5 | 218 | 164 | 75 | 65 |
| Comparative Example 6 | 214 | 165 | 77 | 74 |

As shown in Table 4, it was confirmed that the positive electrode active materials for the sulfide-based all-solid-state batteries of the examples exhibited excellent initial charge/discharge capacity and a high ratio (1C/0.1C) of discharge capacity at 1C and discharge capacity at 0.1C of 70% or more by having a structure in which a niobium (Nb) and tungsten (W)-containing shell was adsorbed onto the surface of a core containing a lithium metal oxide.

This means that, even when the core of the positive electrode active material of the present invention has a high nickel content, there are less cracking at the interface between the positive electrode active material and the solid electrolyte and few side reactions between cobalt contained in the core and the electrolyte, and thus electrode resistance is low.

From these results, in the case of the positive electrode active material for the sulfide-based all-solid-state battery according to the present invention, it can be seen that an increase in electrode resistance according to charging and discharging at the interface between the positive electrode active material and the solid electrolyte is prevented, and thus the lifetime of the battery can be enhanced.

While the present invention has been described above with reference to the exemplary embodiments, it can be understood by those skilled in the art that various modifications and alterations may be made without departing from the technical scope of the present invention described in the appended claims.

Therefore, the technical scope of the present invention should be defined by the appended claims and not limited by the detailed description of the specification.

## Claims

1. A positive electrode active material for an all-solid-state battery, comprising:
a core containing a lithium metal oxide represented by the following Chemical Formula 1; and
a shell adsorbed onto the surface of the core and containing niobium (Nb) and tungsten (W):
[Chemical Formula 1] Liₓ[Ni_{y}Co_{z}Mn_{w}M¹ᵥ]Oᵤ
in Chemical Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v, and u satisfy 1.0≤x≤1.30, 0.7≤y<0.95, 0<z≤0.07, 0.01<w≤0.3, 0≤v≤0.1, and 1.5≤u≤4.5,
wherein a content ratio Nb/W of the niobium (Nb) and tungsten (W) is 0.5 to 3.0.

2. The positive electrode active material of claim 1, wherein the niobium (Nb) and tungsten (W) are in a form in which niobium oxide particles and tungsten oxide particles are mixed or in the form of niobium tungsten oxide particles.

3. The positive electrode active material of claim 1, wherein the niobium (Nb) and tungsten (W) are contained in an amount of 0.01 to 5 wt% with respect to the total weight of the positive electrode active material.

4. The positive electrode active material of claim 1, wherein the niobium (Nb) is contained at 2,500 ppm or more with respect to the total positive electrode active material, and
the tungsten (W) is contained at 6,000 ppm or less with respect to the total positive electrode active material.

5. The positive electrode active material of claim 1, wherein the positive electrode active material has an average particle size of 0.5 µm to 10 µm.

6. The positive electrode active material of claim 1, wherein the shell is adsorbed onto 60% or more of the total core area.

7. A method of preparing a positive electrode active material for an all-solid-state battery, the method comprising:
preparing a mixture including a lithium metal oxide represented by the following Chemical Formula 1 and a niobium (Nb) and tungsten (W)-containing oxide; and
thermally treating the mixture:
[Chemical Formula 1] Liₓ[Ni_{y}Co_{z}Mn_{w}M¹ᵥ]Oᵤ
in Chemical Formula 1,
M¹ is one or more elements selected from the group consisting of W, Cu, Fe, V, Cr, Ti, Zr, Zn, Al, In, Ta, Y, La, Sr, Ga, Sc, Gd, Sm, Ca, Ce, Nb, Mg, B, and Mo, and
x, y, z, w, v, and u satisfy 1.0≤x≤1.30, 0.7≤y<0.95, 0<z≤0.07, 0.01<w≤0.3, 0≤v≤0.1, and 1.5≤u≤4.5,
wherein a content ratio Nb/W of the niobium (Nb) and tungsten (W) is 0.5 to 3.0.

8. The method of claim 7, wherein the niobium (Nb) and tungsten (W)-containing oxide is included in an amount of 0.01 to 5 wt% with respect to the total weight of the mixture.

9. The method of claim 7, wherein the thermal treatment is performed at 300 °C to 500 °C.

10. An all-solid-state lithium secondary battery comprising:
a positive electrode including the positive electrode active material according to claim 1;
a negative electrode; and
a sulfide-based solid electrolyte disposed between the positive electrode and the negative electrode.

11. The all-solid-state lithium secondary battery of claim 10, wherein the sulfide-based solid electrolyte includes one or more selected from the group consisting of Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-Li₂S-P₂0₅, LiI-Li₃PO₄-P₂S₅, and Li₂S-P₂S₅.

## Patentansprüche

1. Positivelektrodenaktivmaterial für eine Festkörperbatterie, umfassend:
einen Kern, der ein Lithiummetalloxid enthält, das durch die folgende chemische Formel 1 dargestellt ist; und
eine Hülle, die auf der Oberfläche des Kerns adsorbiert ist und Niob (Nb) und Wolfram (W) enthält:
[Chemische Formel 1] Liₓ[Ni_{y}Co_{z}Mn_{w}M¹ᵥ]Oᵤ
wobei in der chemischen Formel 1
M¹ ein oder mehrere Elemente ist, die aus der Gruppe ausgewählt sind, die aus W, Cu, Fe, V, Cr, Ti, Zr, Zn, Al, In, Ta, Y, La, Sr, Ga, Sc, Gd, Sm, Ca, Ce, Nb, Mg, B und Mo besteht, und
x, y, z, w, v und u 1,0≤x≤1,30, 0,7≤y<0,95, 0<z≤0,07, 0,01<w≤0,3, 0≤v≤0,1 und 1,5≤u≤4,5 erfüllen,
wobei ein Gehaltsverhältnis Nb/W des Niobs (Nb) und Wolframs (W) 0,5 bis 3,0 beträgt.

2. Positivelektrodenaktivmaterial nach Anspruch 1, bei dem das Niob (Nb) und Wolfram (W) in einer Form, in der Nioboxidteilchen und Wolframoxidteilchen gemischt sind, oder in der Form von Niobwolframoxidteilchen vorliegen.

3. Positivelektrodenaktivmaterial nach Anspruch 1, bei dem das Niob (Nb) und Wolfram (W) in einer Menge von 0,01 bis 5 Gew.-%, bezogen auf das Gesamtgewicht des Positivelektrodenaktivmaterials, enthalten sind.

4. Positivelektrodenaktivmaterial nach Anspruch 1, bei dem das Niob (Nb) in 2.500 ppm oder mehr, bezogen auf das gesamte Positivelektrodenaktivmaterial, enthalten ist, und
das Wolfram (W) in 6.000 ppm oder weniger, bezogen auf das gesamte Positivelektrodenaktivmaterial, enthalten ist.

5. Positivelektrodenaktivmaterial nach Anspruch 1, bei dem das Positivelektrodenaktivmaterial eine durchschnittliche Teilchengröße von 0,5 µm bis 10 µm aufweist.

6. Positivelektrodenaktivmaterial nach Anspruch 1, bei dem die Hülle auf 60% oder mehr der gesamten Kernfläche adsorbiert ist.

7. Verfahren zur Herstellung eines Positivelektrodenaktivmaterials für eine Festkörperbatterie, wobei das Verfahren umfasst:
Herstellen einer Mischung, die ein Lithiummetalloxid enthält, das durch die folgende chemische Formel 1 dargestellt ist, und ein Niob (Nb) und Wolfram (W) enthaltendes Oxid; und
Wärmebehandeln der Mischung:
[Chemische Formel 1] Liₓ[Ni_{y}Co_{z}Mn_{w}M¹ᵥ]Oᵤ
wobei in der chemischen Formel 1
M¹ ein oder mehrere Elemente ist, die aus der Gruppe ausgewählt sind, die aus W, Cu, Fe, V, Cr, Ti, Zr, Zn, Al, In, Ta, Y, La, Sr, Ga, Sc, Gd, Sm, Ca, Ce, Nb, Mg, B und Mo besteht, und
x, y, z, w, v und u 1,0≤x≤1,30, 0,7≤y<0,95, 0<z≤0,07, 0,01<w≤0,3, 0≤v≤0,1 und 1,5≤u≤4,5 erfüllen,
wobei ein Gehaltsverhältnis Nb/W des Niobs (Nb) und Wolframs (W) 0,5 bis 3,0 beträgt.

8. Verfahren nach Anspruch 7, bei dem das Niob (Nb) und Wolfram (W) enthaltende Oxid in einer Menge von 0,01 bis 5 Gew.-%, bezogen auf das Gesamtgewicht der Mischung, enthalten ist.

9. Verfahren nach Anspruch 7, bei dem die Wärmebehandlung bei 300 °C bis 500 °C durchgeführt wird.

10. Festkörper-Lithium-Sekundärbatterie, umfassend:
eine Positivelektrode, die das Positivelektrodenaktivmaterial nach Anspruch 1 enthält;
eine Negativelektrode; und
einen Festelektrolyten auf Basis von Sulfid, der zwischen der Positivelektrode und der Negativelektrode angeordnet ist.

11. Festkörper-Lithium-Sekundärbatterie nach Anspruch 10, bei der der Festelektrolyt auf Basis von Sulfid eines oder mehrere enthält, die aus der Gruppe ausgewählt sind, die aus Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-Li₂S-P₂O₃, LiI-Li₃PO₄-P₂S₅ und Li₂S-P₂S₅ besteht.

## Revendications

1. Matériau actif d'électrode positive pour une batterie entièrement solide comprenant :
un noyau contenant un oxyde métallique de lithium représenté par la Formule chimique 1 ci-après ; et
une enveloppe adsorbée sur la surface du noyau et contenant du niobium (Nb) et du tungstène (W) :
[Formule chimique 1] Liₓ[Ni_{y}Co_{z}Mn_{w}M¹ᵥ]Oᵤ
dans la Formule chimique 1,
M¹ est un ou plusieurs éléments sélectionnés dans le groupe constitué de W, Cu, Fe, V, Cr, Ti, Zr, Zn, Al, In, Ta, Y, La, Sr, Ga, Sc, Gd, Sm, Ca, Ce, Nb, Mg, B et Mo, et
x, y, z, w, v et u satisfont à 1,0≤x≤1,30, 0,7≤y<0,95, 0<z≤0,07, 0,01<w≤0,3, 0≤v≤0,1 et 1,5≤u≤4,5,
dans lequel un rapport en teneur Nb/W du niobium (Nb) et du tungstène (W) est 0,5 à 3,0.

2. Matériau actif d'électrode positive selon la revendication 1, dans lequel le niobium (Nb) et le tungstène (W) sont sous une forme dans laquelle des particules d'oxyde de niobium et des particules d'oxyde de tungstène sont mélangées ou sous la forme de particules d'oxyde de niobium tungstène.

3. Matériau actif d'électrode positive selon la revendication 1, dans lequel le niobium (Nb) et le tungstène (W) sont contenus dans une quantité de 0,01 à 5 % en poids pour le poids total du matériau actif d'électrode positive.

4. Matériau actif d'électrode positive selon la revendication 1, dans lequel le niobium (Nb) est contenu à raison de 2500 ppm ou plus pour le total du matériau actif d'électrode positive, et
le tungstène (W) est contenu à raison de 6000 ppm ou moins pour le total du matériau actif d'électrode positive.

5. Matériau actif d'électrode positive selon la revendication 1, dans lequel le matériau actif d'électrode positive a une taille de particule moyenne de 0,5 µm à 10 µm.

6. Matériau actif d'électrode positive selon la revendication 1, dans lequel l'enveloppe est adsorbée sur 60 % ou plus de la surface totale du noyau.

7. Procédé de préparation d'un matériau actif d'électrode positive pour une batterie entièrement solide, le procédé consistant à :
préparer un mélange incluant un oxyde métallique de lithium représenté par la Formule chimique 1 ci-après et un oxyde contenant du niobium (Nb) et du tungstène (W) ; et
traiter thermiquement le mélange :
[Formule chimique 1] Liₓ[Ni_{y}Co_{z}Mn_{w}M¹ᵥ]Oᵤ
dans la Formule chimique 1,
M¹ est un ou plusieurs éléments sélectionnés dans le groupe constitué de W, Cu, Fe, V, Cr, Ti, Zr, Zn, Al, In, Ta, Y, La, Sr, Ga, Sc, Gd, Sm, Ca, Ce, Nb, Mg, B et Mo, et
x, y, z, w, v et u satisfont à 1,0≤x≤1,30, 0,7≤y<0,95, 0<z≤0,07, 0,01<w≤0,3, 0≤v≤0,1 et 1,5≤u≤4,5,
dans lequel un rapport en teneur Nb/W du niobium (Nb) et du tungstène (W) est 0,5 à 3,0.

8. Procédé selon la revendication 7, dans lequel l'oxyde contenant du niobium (Nb) et du tungstène (W) est inclus dans une quantité de 0,01 à 5 % en poids pour le poids total du mélange.

9. Procédé selon la revendication 7, dans lequel le traitement thermique est effectué de 300°C à 500°C.

10. Batterie rechargeable au lithium entièrement solide comprenant :
une électrode positive incluant le matériau actif d'électrode positive selon la revendication 1 ;
une électrode négative ; et
un électrolyte solide à base de sulfure disposé entre l'électrode positive et l'électrode négative.

11. Batterie rechargeable au lithium entièrement solide selon la revendication 10, dans laquelle l'électrolyte solide à base de sulfure inclut un ou plusieurs éléments sélectionnés dans le groupe constitué de Li₂S-SiS₂, LiI-Li₂S-SiS₂, LiI-Li₂S-P₂S₅, LiI-Li₂S-B₂S₃, Li₃PO₄-Li₂S-Si₂S, Li₃PO₄-Li₂S-SiS₂, LiPO₄-Li₂S-SiS, LiI-Li₂S-P₂O₅, LiI-Li₃PO₄-P₂S₅ et Li₂S-P₂Ss.
